(19) Europäisches Patentamt
European Patent Office
Office européen des brevets

(11) **EP 2 726 523 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
***C08G 18/10*** *(2006.01)*   ***C08G 18/42*** *(2006.01)*
***C08G 18/71*** *(2006.01)*   ***C08G 18/76*** *(2006.01)*

(21) Anmeldenummer: **12729165.6**

(22) Anmeldetag: **26.06.2012**

(86) Internationale Anmeldenummer:
**PCT/EP2012/062358**

(87) Internationale Veröffentlichungsnummer:
**WO 2013/000912 (03.01.2013 Gazette 2013/01)**

(54) **HOCHWERTIGE POLYURETHANELASTOMERE UND IHRE HERSTELLUNG**

HIGH-VALUE POLYURETHANE ELASTOMERS AND PRODUCTION THEREOF

ÉLASTOMÈRES DE POLYURÉTHANE DE QUALITÉ SUPÉRIEURE ET LEUR PRÉPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2011 DE 102011078351**

(43) Veröffentlichungstag der Anmeldung:
**07.05.2014 Patentblatt 2014/19**

(73) Patentinhaber: **Covestro Deutschland AG 51373 Leverkusen (DE)**

(72) Erfinder:
• **HUPKA, Florian**
  **40591 Münster (DE)**
• **REITER, Stephan**
  **40764 Langenfeld (DE)**
• **NEFZGER, Hartmut**
  **50259 Pulheim (DE)**
• **KRAUSE, Jens**
  **51375 Leverkusen (DE)**

(74) Vertreter: **Levpat c/o Covestro AG Alfred-Nobel-Straße 10 40789 Monheim am Rhein (DE)**

(56) Entgegenhaltungen:
**EP-A2- 1 997 841     WO-A1-2007/022884**
**US-A1- 2005 148 105**

**Beschreibung**

Die vorliegende Erfindung betrifft hochwertige Polyurethan- (PUR) und Polyurethanhamstoffelastomere, die durch Verwendung von niedrigviskosen Prepolymeren auf Basis von 1,5-Naphthalindiisocyanat besonders einfach zu verarbeiten sind, sowie ein Verfahren zu deren Herstellung.

PUR-Gießelastomere sind wertvolle Werkstoffe und werden aus Polyisocyanaten, Polyolen und Kettenverlängerern und/oder Vernetzern hergestellt. Ein technisch wichtiges Polyisocyanat ist hierbei das 1,5-Naphthalindiisocyanat (NDI).

Als Polyole kommen die dem Fachmann bekannten meist hydroxylgruppenterminierten Polyester- oder Polyetherpolyole in Betracht. Als Kettenverlängerer werden kurzkettige Polyole, wie z.B. Ethylenglykol oder 1,4-Butylenglykol ebenso eingesetzt wie kurzkettige Polyamine, wie z.B. 4,4'-Methylen-bis(2-chloranilin) (MBOCA) oder auch Wasser.

Polyurethane auf Basis von 1,5-Naphthalindiisocyanat (z. B. Desmodur® 15 von Bayer MaterialScience AG) sind lange bekannt und werden von Bayer MaterialScience AG unter dem Handelsnamen Vullcollan® bevorzugt in hochwertigen Anwendungen kommerziell vermarktet. Polyurethane auf Basis von 1,5-Naphthalindiisocyanat zeichnen sich hierbei dadurch aus, dass sie neben exzellenten mechanisch-dynamischen Eigenschaften auch hervorragendes Dauergebrauchsverhalten verglichen mit vielen anderen Werkstoffen aufweisen.

Die Verwendung von NDI zur Herstellung von Gießelastomeren ist ebenfalls bekannt und z. B. in DE-A 1694169 beschrieben. Hierbei werden Polyesterpolyole, deren Erweichungstemperaturen im Bereich von 60 bis 145°C liegen, eingesetzt.

Bei der Herstellung von PUR-Gießelastomeren wird zwischen dem One-Shot-Verfahren, bei dem die Reaktionskomponenten Polyisocyanat, Polyol und Kettenverlängerer gleichzeitig miteinander umgesetzt werden, und dem Prepolymerverfahren, bei dem das Polyol mit dem Polyisocyanat umgesetzt wird und erst dann die Kettenverlängerungskomponente eingesetzt wird, unterschieden.

Da Oligomere, gebildet aus NDI und niedermolekularem Kettenverlängerer, in Folge ihrer schlechten Löslichkeit in der reagierenden Schmelze aus NDI, Kettenverlängerer und Polyol, ausfallen und somit einer vollständigen Umsetzung und Ankopplung an die Polyolkomponente entzogen sind, werden Elastomere auf NDI-Basis im Unterschied zu Hexamethylendiisocyanat, Toluoldiisocyanat oder 4,4'-Diphenylmethandiisocyanat basierten Elastomeren nur nach dem Prepolymerverfahren und nicht im One-Shot-Verfahren hergestellt.

Andererseits macht es der vergleichsweise hohe Schmelzpunkt des NDI von 127 °C erforderlich, die NCO-Prepolymere auf NDI-Basis bei Umsetzungstemperaturen oberhalb dieser Temperatur herzustellen, um eine homogene Reaktionsmischung zu gewährleisten. NCO-Prepolymere auf NDI-Basis, wie sie in großem Maßstab zur Herstellung von NDI basierten Gießelastomeren verwendet werden, zeigen jedoch bei der hohen Temperaturbelastung (≥127 °C) nur eine geringe Lagerstabilität, da infolge der hohen Temperaturen Nebenreaktionen auftreten, die letztlich zu einem Abfall der NCO-Kennzahl führen, verbunden mit einem Anstieg der Viskosität, so dass eine einfache Verarbeitung mindestens erschwert, wenn nicht unmöglich wird.

Die vorgenannte Problematik von konventionellen, nicht lagerstabilen NDI-Prepolymeren ist der Hintergrund von Verarbeitungsempfehlungen, die die Kettenverlängerungsreaktion innerhalb von 30 Minuten nach Herstellung des NDI-Prepolymeren vorschreiben bzw. von Beschreibungen in der Literatur, die die Lagerfähigkeit von NDI-Prepolymeren ganz generell in Zweifel ziehen: So heißt es in "Solid Polyurethane Elastomers, P.Wright und A.P.C. Cummings, Maclaren and Sons, London 1969, S. 104 ff. im Kapitel 6.2. wie folgt:

*"6.2.1. Unstable Prepolymer Systems (Vulkollan®) (Vulkollan®; Handelsname für Gießelastomersysteme auf Basis Naphthalindiisocyanat (NDI) der Bayer MaterialScience AG).*

Vulkollan® is manufactured by a prepolymer route, although the prepolymer is non-storable and must be further reacted within a short interval of time. The prepolymer so formed is relatively unstable since further undesirable side reactions can take place. To reduce the possibility of these side reactions occurring, the next stage in the process, viz. the chain extension, should take place as soon as possible but within a maximum of 30 minutes."

Diese Ausführungen machen deutlich, warum eine niedrige Anfangsviskosität des Prepolymers wichtig ist, da die Viskosität innerhalb der empfohlenen 30 min bereits deutlich ansteigt und somit eine Verarbeitung, insbesondere bei größeren und/oder komplizierteren Formteilen mindestens erschwert, wenn nicht unmöglich wird, da die reagierende Schmelze aus hochviskosem Prepolymer und Kettenverlängerer weit vom Anguss entfernte Formbereiche beispielsweise nicht mehr erreicht. Generell ist eine geringe Anfangsviskosität der NDI-Prepolymeren auch wünschenswert, um ein einfaches Eindispergieren des Kettenverlängerers zu gewährleisten. Insbesondere NDI basierte Elastomere mit hohen Härten, basierend auf Prepolymeren mit hohem NCO-Gehalt, bei denen beispielsweise 1,4-Butandiol als Kettenverlängerer eingesetzt wird, zeigen darüber hinaus extrem geringe Gießzeiten, so dass auch unter diesem Aspekt große, komplizierte Formteile kaum herzustellen sind.

In WO 2007/022884 A1 wird 2,2'-Thiodiethanol als Kettenverlängerungsmittel beschrieben, das es gestattet, längere Gießzeiten bei der Umsetzung von PUR-NCO-Prepolymeren mit Vernetzern zu erzielen, wobei die mechanischen Eigenschaften der so hergestellten PUR-Elastomere nicht schlechter sind als die von vergleichbaren Elastomeren des Standes der Technik. Diese verlängerte Gießzeit ermöglicht es, komplizierte Formteile aus harten PUR-Elastomeren herzustellen.

Die Aufgabe der vorliegenden Erfindung war es daher, die Anfangsviskosität des Prepolymers zum Zwecke einer besseren Verarbeitbarkeit zu erniedrigen, ohne dass die mechanischen Eigenschaften der daraus hergestellten PUR-Elastomere schlechter werden als die von vergleichbaren Elastomeren des Standes der Technik, wobei zu berücksichtigen war, dass Additive, die zur Viskositätserniedrigung eingesetzt werden, wie z.B. Rizinusölderivate, bei den hohen Einsatztemperaturen häufig nicht stabil sind bzw. dazu führen, dass sich sowohl die mechanischen als auch die mechanisch-dynamischen Eigenschaften der PUR-Elastomere stark verschlechtern.

Überraschenderweise wurde gefunden, dass geringe Anteile von 1-Naphthylisocyanat im 1,5-Naphthalindiisocyanat eine deutliche Erniedrigung der Viskosität hervorrufen. Dabei ist dem Fachmann durchaus bekannt, dass die gezielte Zugabe von Zusätzen zu einem Prepolymer die Viskosität zwar erniedrigen kann, allerdings ist ihm auch bekannt, dass sich gleichzeitig die mechanischen Werte der fertigen Formteile stark verschlechtern. Es wurde überraschenderweise gefunden, dass sich durch die Zugabe 0,05-0,7 Gew.-%, bezogen auf Polyol, an 1-Naphthylisocyanat zum verwendeten NDI, die Anfangsviskosität des Prepolymers deutlich verringert und gleichzeitig die mechanischen und mechanisch-dynamischen Eigenschaften des Elastomers ausreichend gut sind. Damit ist es möglich, auch bei kurzen Gießzeiten, wie sie für Formulierungen für PUR-Elastomere hoher Härte typisch sind, komplizierte Bauteile herzustellen.

Gegenstand der vorliegenden Erfindung ist daher ein Verfahren zur Herstellung von niedrigviskosen NCO-Prepolymeren auf Basis 1,5-Naphthalindiisocyanat, welches dadurch gekennzeichnet ist, dass

a) 1,5-Naphthalindiisocyanat (NDI), das mit 0,05 bis 0,7 Gew.-%, bevorzugt 0,05 bis 0,5 Gew.-%, bezogen auf Komponente b), 1-Naphthylisocyanat versetzt ist, mit

b) Polyolen, die eine Temperatur von 80°C bis 240°C aufweisen, zahlenmittlere Molekulargewichte von 850 bis 3000 g/mol, bevorzugt von 1000 bis 3000 g/mol, bei 120 °C gemessene Viskositäten von $\leq$ 2500 mPas, bevorzugt 500 bis 2500 mPas, und Funktionalitäten von 1,95 bis 2,15 haben, ausgewählt aus der Gruppe bestehend aus Polyesterpolyolen, Poly-$\varepsilon$-caprolactonpolyolen, Polycarbonatpolyolen, Polyetherpolyolen und $\alpha$-Hydro-$\omega$-hydroxy-poly(oxytetramethylen)polyolen in einem Verhältnis von NCO- zu OH-Gruppen von 1,5:1 bis 3,05:1, bevorzugt 1,6:1 bis 2,95:1, besonders bevorzugt von 1,7:1 bis 2,85:1, kontinuierlich oder diskontinuierlich umgesetzt wird.

Ein weiterer Gegenstand der vorliegenden Erfindung ist ein Verfahren zur Herstellung von Polyurethan-Elastomeren, welches dadurch gekennzeichnet ist, dass die erfindungsgemäß hergestellten NCO-Prepolymere auf Basis 1,5-Naphthalindiisocyanat mit

c) Hydroxylgruppen aufweisenden Kettenverlängerern mit Molmassen von 62 bis 450 Da und Funktionalitäten von 2 bis 3 und/oder Wasser,

d) gegebenenfalls in Gegenwart von Treibmitteln, Hilfs- und Zusatzstoffen umgesetzt werden.

Die erfindungsgemäß hergestellten Polyurethanelastomere umfassen sowohl zellige als auch massive PUR-Elastomere.

Ein weiterer Gegenstand der vorliegenden Erfindung sind niedrigviskose NCO-Prepolymere auf Basis 1,5-Naphthalindiisocyanat, welche dadurch gekennzeichnet sind, dass sie erhältlich sind aus

a) 1,5-Naphthalindiisocyanat (NDI), das mit 0,05 bis 0,7 Gew.-%, bevorzugt 0,05 bis 0,5 Gew.-%, bezogen auf Komponente b), 1-Naphthylisocyanat versetzt ist, und

b) Polyolen, die eine Temperatur von 80°C bis 240°C aufweisen, zahlenmittlere Molekulargewichte von 850 bis 3000 g/mol, bevorzugt von 1000 bis 3000 g/mol, bei 120 °C gemessene Viskositäten von $\leq$ 2500 mPas, bevorzugt 500 bis 2500 mPas, und Funktionalitäten von 1,95 bis 2,15 haben, ausgewählt aus der Gruppe bestehend aus Polyesterpolyolen, Poly-$\varepsilon$-caprolactonpolyolen, Polycarbonatpolyolen, Polyetherpolyolen und $\alpha$-Hydro-$\omega$-hydroxy-poly(oxytetramethylen)polyolen
in einem Verhältnis von NCO- zu OH-Gruppen von 1,5:1 bis 3,05:1, bevorzugt 1,6:1 bis 2,95:1, besonders bevorzugt 1,7:1 bis 2,85:1.

Ein weiterer Gegenstand der vorliegenden Erfindung sind Polyurethan-Elastomere, welche dadurch gekennzeichnet sind, dass sie erhältlich sind aus den erfindungsgemäßen NCO-Prepolymeren auf Basis 1,5-Naphthalindiisocyanat und

c) Hydroxylgruppen aufweisenden Kettenverlängerern mit Molmassen von 62 bis 450 Da und Funktionalitäten von 2 bis 3 und/oder Wasser,

d) gegebenenfalls in Gegenwart von Treibmitteln, Hilfs- und Zusatzstoffen.

Die erfindungsgemäßen Polyurethanelastomere können als Dämpfungselemente im Fahrzeugbau, beispielsweise im Automobilbau, z. B. als Zusatzfedern, Anschlagpuffer, Querlenkerlager, Hinterachsenfahrschemellager, Stabilisator-Lager, Längsstreben-Lager, Federbein- Stützlager, Stoßdämpferlager, Lager für Dreieckslenker sowie als auf der Felge befindliches Notrad und als Beschichtung für Rollen, Räder und Walzen eingesetzt werden.
Die Erfindung soll anhand der nachfolgenden Beispiele näher erläutert werden.

**Beispiele:**

**Verwendete Ausgangsverbindungen und Messgeräte:**

Desmodur® 15 der Fa. Bayer MaterialScience AG: 1,5-Naphthalindiisocyanat

Vulkollan® 2000 MM der Fa. Bayer MaterialScience AG: Polyethylenadipat, OH-Zahl (OHZ) 55, Funktionalität 2

1-Naphthylisocyanat der Fa. Acros Organics

Butandiol: 1,4-Butandiol der Fa. Aldrich

Viskosimeter: Physica MCR 51 der Fa. Anton Paar

**Beispiel 1: Herstellung von NDI-Elastomeren niedriger Härte unter Zugabe unterschiedlicher Mengen an 1-Naphthylisocyanat**

A-1 V ist ein Vergleichsbeispiel, A-2, A-3 und A-4 sind erfindungsgemäße Beispiele.
100 Gew.-Tle. Vulkollan® 2000 MM wurden auf 110 °C erwärmt und entgast. Die Temperatur wurde auf 133 °C erhöht. Danach wurden 18 Gew.-Tle. Desmodur® 15, welches zuvor mit 0 (A-IV), 0,1 (A-2), 0,3 (A-3) oder 0,5 (A-4) Gew.-Tln. 1-Naphthylisocyanat versetzt wurde, unter Rühren hinzugegeben. Anschließend wurde Vakuum angelegt. Nach 5 Minuten wurde die Viskosität des entstandenen Prepolymers gemessen (siehe Tabelle 1). Nach 15 Minuten Reaktionszeit war die Exothermie der Reaktion abgeklungen, und die Prepolymerschmelze wies eine Temperatur von 125 °C auf. Man verrührte mit 2 Gew.-Tln. 1,4-Butandiol und goss das noch dünnflüssige Reaktionsgemisch in auf 110 °C vorgewärmte Formen, entformte nach 30 Minuten und temperte im Umlufttrockenschrank für 16 Std. bei 110 °C nach. Die mechanischen und mechanisch-dynamischen Eigenschaften wurden bestimmt (siehe Tabelle 2).

**Tabelle 1:** Rezepturen der hergestellten Elastomere und Viskositäten der hergestellten Prepolymere mit unterschiedlichen Gehalten an 1-Naphthylisocyanat

| | Elastomer | | A-1V | A-2 | A-3 | A-4 |
|---|---|---|---|---|---|---|
| **Rezeptur für Prepolymer:** | | | | | | |
| | Vulkollan® 2000 MM | [Gew.-Tle] | 100 | 100 | 100 | 100 |
| | 1,5-Naphthalindiisocyanat | [Gew.-Tle] | 18 | 17,9 | 17,7 | 17,5 |
| | 1-Naphthylisocyanat | [Gew.-Tle] | 0,0 | 0,1 | 0,3 | 0,5 |
| **Kettenverlängerer:** | | | | | | |
| | 1,4-Butandiol | [Gew.-Tle] | 2,0 | 2,0 | 2,0 | 2,0 |
| **Kenngrößen der Umsetzung:** | | | | | | |

(fortgesetzt)

| | Elastomer | | A-1V | A-2 | A-3 | A-4 |
|---|---|---|---|---|---|---|
| | Gesamtkennzahl | | 120,4 | 120,1 | 119,6 | 119,1 |
| | OH-Zahl Polyol | [mgKOH/g] | 55 | 55 | 55 | 55 |
| | Prepolymertemperatur | [°C] | 130 | 126 | 131 | 127 |
| | Gießzeit | [s] | 150 | 150 | 150 | 150 |
| | Formtemperatur | [s] | 110 | 110 | 110 | 110 |
| | Entformung nach | [min] | 30 | 30 | 30 | 30 |
| | Viskosität des Prepolymers | [mPas] | 2390 | 2270 | 2080 | 1940 |

**Tabelle 2:** Mechanische und mechanisch-dynamische Eigenschaften der nicht geschäumten Elastomere

| | Elastomer | | B-1V | B-2 | B-3 | B-4 |
|---|---|---|---|---|---|---|
| **Mechanische Eigenschaften:** | | | | | | |
| DIN 53505 | Shore A-Härte | [Shore A] | 86 | 85 | 85 | 84 |
| DIN 53505 | Shore D-Härte | [Shore D] | 33 | 33 | 33 | 31 |
| DIN 53504 | Spannung 100% | [MPa] | 4,6 | 4,5 | 4,5 | 4,1 |
| DIN 53504 | Spannung 300% | [MPa] | 10,9 | 9,7 | 9,3 | 8,5 |
| DIN 53504 | Reißspannung | [MPa] | 50,3 | 43,5 | 40,3 | 39,8 |
| DIN 53504 | Reißdehnung | [%] | 640 | 679 | 615 | 737 |
| DIN 53515 | Weiterreißwiderstand (Graves) | [kN/m] | 37 | 38 | 49 | 49 |
| DIN 53512 | Stoßelastizität | [%] | 49 | 51 | 49 | 50 |
| DIN 53516 | Abrieb | [mm$^3$] | 40 | 42 | 59 | 48 |
| DIN 53520 | Dichte | [g/mm$^3$] | 1,248 | 1,249 | 1,249 | 1,246 |
| **Mechanisch-dynamische Eigenschaften:** | | | | | | |
| DIN EN ISO 6721-2 | Speichermodul, G' bei -15 °C | [MPa] | 22 | 23 | 25 | 23 |
| DIN EN ISO 6721-2 | Speichermodul, G' bei 50 °C | [MPa] | 17 | 16 | 18 | 16 |
| DIN EN ISO 6721-2 | Speichermodul, G' bei 110 °C | [MPa] | 17 | 16 | 17 | 16 |
| | Quotient aus $\dfrac{'G' \, bei -15°C}{G' \, bei \, 110°C}$ | | 1,35 | 1,47 | 1,45 | 1,40 |
| DIN EN ISO 6721-2 | Verlustfaktor tan$\delta$ bei -15 °C | | 0,26 | 0,31 | 0,27 | 0,26 |
| DIN EN ISO 6721-2 | Verlustfaktor tan$\delta$ bei 50 °C | | 0,02 | 0,03 | 0,02 | 0,03 |
| DIN EN ISO 6721-2 | Verlustfaktor tan$\delta$ bei 110 °C | | 0,02 | 0,03 | 0,03 | 0,03 |
| | tan$\delta$ min. | [°C] | 90 | 40 | 45 | 85 |
| | tan$\delta$ max. | [°C] | -25 | -20 | -21 | -20 |

**Beispiel 2: Herstellung von NDI-Elastomeren hoher Härte unter Zugabe unterschiedlicher Mengen an 1-Naohthylisocyanat**

A-5V ist ein Vergleichsbeispiel, A-6, A-7 und A-8 sind erfindungsgemäße Beispiele.
100 Gew.-Tle. Vulkollan® 2000 MM wurden bei 110 °C erwärmt und entgast. Die Temperatur wurde auf 133 °C erhöht. Danach wurden 25 Gew.-Tle. Desmodur® 15, welches zuvor mit 0 **(A-5V)**, 0,1 **(A-6),** 0,3 **(A-7)** oder 0,5 **(A-**

**8)** Gew.-Tln. 1-Naphthylisocyanat versetzt wurde, unter Rühren hinzugegeben. Anschließend wurde Vakuum angelegt. Nach 5 Minuten wurde die Viskosität des entstandenen Prepolymers gemessen (siehe Tabelle 3). Nach 15 Minuten Reaktionszeit war die Exothermie der Reaktion abgeklungen, und die Prepolymerschmelze wies eine Temperatur von 125 °C auf. Man verrührte mit 5 Gew.-Tln. 1,4-Butandiol und goss das noch dünnflüssige Reaktionsgemisch in auf 110 °C vorgewärmte Formen, entformte nach 30 Minuten und temperte im Umlufttrockenschrank für 16 Std. bei 110 °C nach. Die mechanischen und mechanisch-dynamischen Eigenschaften wurden bestimmt (siehe Tabelle 4).

**Tabelle 3:** Rezepturen der hergestellten Elastomere und Viskositäten der hergestellten Prepolymere mit unterschiedlichen Gehalten an 1-Naphthylisocyanat

| | Elastomer | | A-5V | A-6 | A-7 | A-8 |
|---|---|---|---|---|---|---|
| **Rezeptur für Prepolymer:** | | | | | | |
| | Vulkollan® 2000 MM | [Gew.-Tle] | 100 | 100 | 100 | 100 |
| | 1,5-Naphthalindiisocyanat | [Gew.-Tle] | 25 | 24,9 | 24,7 | 24,5 |
| | 1-Naphthylisocyanat | [Gew.-Tle] | 0,0 | 0,1 | 0,3 | 0,5 |
| **Kettenverlängerer:** | | | | | | |
| | 1,4-Butandiol | [Gew.-Tle] | 5 | 5 | 5 | 5 |
| **Kenngrößen der Umsetzung:** | | | | | | |
| | Gesamtkennzahl | | 113,9 | 113,7 | 113,4 | 113,1 |
| | OH-Zahl Polyol | [mgKOH/g] | 55 | 55 | 55 | 55 |
| | Prepolymertemperatur | [°C] | 128 | 129 | 128 | 127 |
| | Gießzeit | [s] | 100 | 100 | 100 | 100 |
| | Formtemperatur | [s] | 110 | 110 | 110 | 110 |
| | Entformung nach | [min] | 30 | 30 | 30 | 30 |
| | Viskosität des Prepolymers | [mPas] | 1050 | 1030 | 880 | 840 |

**Tabelle 4:** Mechanische und mechanisch-dynamische Eigenschaften der nicht geschäumten Elastomeren.

| | Elastomer | | B-5V | B-6 | B-7 | B-8 |
|---|---|---|---|---|---|---|
| **Mechanische Eigenschaften:** | | | | | | |
| DIN 53505 | Shore A-Härte | [Shore A] | 95 | 94 | 93 | 93 |
| DIN 53505 | Shore D-Härte | [Shore D] | 37 | 37 | 35 | 34 |
| DIN 53504 | Spannung 100% | [MPa] | 7,7 | 7,6 | 7,6 | 7,3 |
| DIN 53504 | Spannung 300% | [MPa] | 14,4 | 14,4 | 14,3 | 13,1 |
| DIN 53504 | Reißspannung | [MPa] | 33,2 | 28,6 | 31,2 | 25,5 |
| DIN 53504 | Reißdehnung | [%] | 687 | 627 | 689 | 637 |
| DIN 53515 | Weiterreißwiderstand (Graves) | [kN/m] | 72 | 68 | 66 | 61 |
| DIN 53512 | Stoßelastizität | [%] | 59 | 57 | 56 | 56 |
| DIN 53516 | Abrieb | [mm$^3$] | 63 | 68 | 52 | 59 |
| DIN 53520 | Dichte | [g/mm$^3$] | 1,256 | 1,255 | 1,256 | 1,254 |
| **Mechanisch-dynamische Eigenschaften:** | | | | | | |
| DIN EN ISO 6721-2 | Speichermodul, G' bei -15 °C | [MPa] | 49 | 52 | 50 | 53 |
| DIN EN ISO 6721-2 | Speichermodul, G' bei 50 °C | [MPa] | 33 | 34 | 32 | 32 |
| DIN EN ISO 6721-2 | Speichermodul, G' bei 110 °C | [MPa] | 30 | 33 | 31 | 29 |

(fortgesetzt)

| | Elastomer | | B-5V | B-6 | B-7 | B-8 |
|---|---|---|---|---|---|---|
| | Quotient aus $\dfrac{'G'\,bei-15°C}{G'\,bei\,110°C}$ | | 1,63 | 1,59 | 1,62 | 1,82 |
| DIN EN ISO 6721-2 | Verlustfaktor tan$\delta$ bei -15 °C | | 0,21 | 0,21 | 0,19 | 0,21 |
| DIN EN ISO 6721-2 | Verlustfaktor tan$\delta$ bei 50 °C | | 0,03 | 0,03 | 0,03 | 0,04 |
| DIN EN ISO 6721-2 | Verlustfaktor tan$\delta$ bei 110 °C | | 0,02 | 0,02 | 0,03 | 0,04 |
| | tan$\delta$ min. | [°C] | 120 | 110 | 100 | 100 |
| | tan$\delta$ max. | [°C] | -21 | -20 | -25 | -20 |

Tabelle 1 und 3 zeigen, dass die Viskositäten der erfindungsgemäßen Prepolymere erheblich niedriger liegen als die Viskositäten der Vergleichsprepolymere. Die Tabellen 2 und 4 verdeutlichen, dass die mechanischen und mechanisch-dynamischen Eigenschaften der erfindungsgemäßen Elastomere trotz Zugabe von 1-Naphthylisocyanat ähnlich den Eigenschaften der Vergleichsbeispiele sind.

**Patentansprüche**

1. Verfahren zur Herstellung von niedrigviskosen NCO-Prepolymeren auf Basis 1,5-Naphthalindiisocyanat, **dadurch gekennzeichnet, dass**

    a) 1,5-Naphthalindiisocyanat (NDI), das mit 0,05 bis 0,7 Gew.-%, bezogen auf Komponente b), 1-Naphthylisocyanat versetzt ist, mit
    b) Polyolen, die eine Temperatur von 80°C bis 240°C aufweisen, zahlenmittlere Molekulargewichte von 850 bis 3000 g/mol, bevorzugt von 1000 bis 3000 g/mol, bei 120 °C gemessene Viskositäten von ≤ 2500 mPas und Funktionalitäten von 1,95 bis 2,15 haben, ausgewählt aus der Gruppe bestehend aus Polyesterpolyolen, Poly-ε-caprolactonpolyolen, Polycarbonatpolyolen, Polyetherpolyolen und α-Hydro-ω-hydroxy-poly(oxytetramethylen)polyolen

    in einem Verhältnis von NCO- zu OH-Gruppen von 1,5:1 bis 3,05:1 kontinuierlich oder diskontinuierlich umgesetzt wird.

2. Verfahren zur Herstellung von Polyurethan-Elastomeren, **dadurch gekennzeichnet, dass** die gemäß Anspruch 1 hergestellten NCO-Prepolymere auf Basis 1,5-Naphthalindiisocyanat mit

    c) Hydroxylgruppen aufweisenden Kettenverlängerern mit Molmassen von 62 bis 450 Da und Funktionalitäten von 2 bis 3 und/oder Wasser,
    d) gegebenenfalls in Gegenwart von Treibmitteln, Hilfs- und Zusatzstoffen umgesetzt werden.

3. Niedrigviskose NCO-Prepolymere auf Basis 1,5-Naphthalindiisocyanat erhältlich aus

    a) 1,5-Naphthalindiisocyanat (NDI), das von 0,05 bis 0,7 Gew.-%, bezogen auf Komponente b), 1-Naphthylisocyanat enthält, und
    b) Polyolen, die zahlenmittlere Molekulargewichte von 850 bis 3000 g/mol, bevorzugt von 850 bis 3000 g/mol, bei 120 °C gemessene Viskositäten von ≤ 2500 mPas und Funktionalitäten von 1,95 bis 2,15 haben, ausgewählt aus der Gruppe bestehend aus Polyesterpolyolen, Poly-ε-caprolactonpolyolen, Polycarbonatpolyolen, Polyetherpolyolen und α-Hydro-ω-hydroxy-poly(oxytetramethylen)polyolen

    in einem Verhältnis von NCO- zu OH-Gruppen von 1,5:1 bis 3,05:1.

4. Polyurethan-Elastomere erhältlich aus den NCO-Prepolymeren auf Basis 1,5-Naphthalindiisocyanat gemäß Anspruch 3 und

c) Hydroxylgruppen aufweisenden Kettenverlängerern mit Molmassen von 62 bis 450 Da und Funktionalitäten von 2 bis 3 und/oder Wasser,
d) gegebenenfalls in Gegenwart von Treibmitteln, Hilfs- und Zusatzstoffen.

**5.** Verwendung der Polyurethanelastomere gemäß Anspruch 4 als Dämpfungselemente im Fahrzeugbau sowie als auf der Felge befindliches Notrad und als Beschichtung für Rollen, Räder und Walzen.

**Claims**

**1.** Process for the production of low-viscosity NCO prepolymers based on naphthalene 1,5-diisocyanate, **characterized in that**

a) naphthalene 1,5-diisocyanate (NDI) with which from 0.05 to 0.7% by weight, based on component b), of naphthyl 1-isocyanate has been admixed is reacted continuously or batchwise with
b) polyols which have a temperature of from 80°C to 240°C, number-average molar masses of from 850 to 3000 g/mol, preferably from 1000 to 3000 g/mol, viscosities of $\leq$ 2500 mPas measured at 120°C, and functionalities of from 1.95 to 2.15, selected from the group consisting of polyester polyols, poly-$\varepsilon$-caprolactone polyols, poly-carbonate polyols, polyether polyols, and $\alpha$-hydro-$\omega$-hydroxypoly(oxytetramethylene) polyols

in a ratio of NCO groups to OH groups of from 1.5:1 to 3.05:1.

**2.** Process for the production of polyurethane elastomers, **characterized in that** the NCO prepolymers produced according to Claim 1, based on naphthalene 1,5-diisocyanate, are reacted with

c) chain extenders which have hydroxy groups and having molecular weights of from 62 to 450 daltons, and functionalities of from 2 to 3, and/or water,
d) optionally in the presence of blowing agents, auxiliaries, and additives.

**3.** Low-viscosity NCO prepolymers based on naphthalene 1,5-diisocyanate obtainable from

a) naphthalene 1,5-diisocyanate (NDI) with which from 0.05 to 0.7% by weight, based on component b), of naphthyl 1-isocyanate has been admixed and
b) polyols which have number-average molar masses of from 850 to 3000 g/mol, preferably from 850 to 3000 g/mol, viscosities of $\leq$ 2500 mPas measured at 120°C, and functionalities of from 1.95 to 2.15, selected from the group consisting of polyester polyols, poly-$\varepsilon$-caprolactone polyols, polycarbonate polyols, polyether polyols, and $\alpha$-hydro-$\omega$-hydroxypoly(oxytetramethylene) polyols

in a ratio of NCO groups to OH groups of from 1.5:1 to 3.05:1.

**4.** Polyurethane elastomers obtainable from the NCO prepolymers based on naphthalene 1,5-diisocyanate according to Claim 3 and from

c) chain extenders which have hydroxy groups and having molecular weights of from 62 to 450 daltons, and functionalities of from 2 to 3, and/or water,
d) optionally in the presence of blowing agents, auxiliaries, and additives.

**5.** Use of the polyurethane elastomers according to Claim 4 as damping elements in vehicle construction, and also as emergency wheel located on the wheel rim, and as coating for rollers, wheels, and rolls.

**Revendications**

**1.** Procédé de fabrication de prépolymères NCO à faible viscosité à base de diisocyanate de 1,5-naphtalène, **caractérisé en ce qu'**on fait réagir en continu ou d'une manière discontinue

a) du diisocyanate de 1,5-naphtalène (NDI), qui est additionné de 0,05 à 0,7 % en poids, par rapport au composant b), d'isocyanate de 1-naphtyle, avec

b) des polyols qui présentent une température de 80ºC à 240°C, une masse moléculaire moyenne en nombre de 850 à 3000 g/mol, de préférence de 1000 à 3000 g/mol, une viscosité mesurée à 120°C ≤ 2500 mPa.s et une fonctionnalité de 1,95 à 2,15, choisis dans le groupe consistant en les polyesterpolyols, les poly-ε-caprolactonepolyols, les polycarbonatepolyols, les polyétherpolyols et les α-hydro-ω-hydroxy-poly(oxytétraméthylène)polyols, avec un rapport des groupes NCO aux groupes OH de 1,5:1 à 3,05:1.

2. Procédé de fabrication d'élastomères d'uréthanne, **caractérisé en ce que** les prépolymères NCO à base de diisocyanate de 1,5-naphtalène, fabriqués selon la revendication 1, sont mis à réagir

c) avec des extenseurs de chaîne comportant des groupes hydroxyle, ayant une masse moléculaire de 62 à 450 Da et une fonctionnalité de 2 à 3, et/ou de l'eau,
d) éventuellement en présence d'agents porogènes, d'adjuvants et d'additifs.

3. Prépolymères NCO à faible viscosité à base de diisocyanate de 1,5-naphtalène, pouvant être obtenus à partir

a) de diisocyanate de 1,5-naphtalène (NDI), qui contient de 0,05 à 0,7 % en poids, par rapport au composant b), d'isocyanate de 1-naphtyle, et
b) de polyols qui ont une masse moléculaire moyenne en nombre de 850 à 3000 g/mol, de préférence de 850 à 3000 g/mol, une viscosité mesurée à 120°C ≤ 2500 mPa.s et une fonctionnalité de 1,95 à 2,15, choisis dans le groupe consistant en les polyesterpolyols, les poly-ε-caprolactonepolyols, les polycarbonatepolyols, les polyétherpolyols et les α-hydro-ω-hydroxy-poly(oxytétraméthylène)polyols,

selon un rapport des groupes NCO aux groupes OH de 1,5:1 à 3,05:1.

4. Elastomères de polyuréthanne pouvant être obtenus à partir des prépolymères NCO à base de diisocyanate de 1,5-naphtalène selon la revendication 3, et

c) d'extenseurs de chaîne comportant des groupes hydroxyle, ayant une masse moléculaire de 62 à 450 Da et une fonctionnalité de 2 à 3, et/ou de l'eau,
d) éventuellement en présence d'agents porogènes, d'adjuvants et d'additifs.

5. Utilisation d'élastomères de polyuréthanne selon la revendication 4 en tant qu'éléments d'amortissement en construction automobile, ainsi qu'en tant que roue de secours se trouvant sur la jante, et en tant que revêtement pour cylindres, roues et rouleaux.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1694169 A
- WO 2007022884 A1

**In der Beschreibung aufgeführte Nicht-Patentliteratur**

- Solid Polyurethane Elastomers. P.Wright und A.P.C. Cummings. Maclaren and Sons, 1969, 104 ff